# EUROPÄISCHE PATENTSCHRIFT

(11) **EP 3 674 673 B1**
(45) Veröffentlichungstag und Bekanntmachung des Hinweises auf die Patenterteilung: **30.03.2022**
(21) Anmeldenummer: 18248301.6
(22) Anmeldetag: 28.12.2018
(51) Int. Cl.: G01G 11/00

(54) **MANIPULATIONSSICHERE WÄGE-FÖRDERVORRICHTUNG**
MANIPULATION-PROOF CONVEYOR WEIGHING DEVICE
DISPOSITIF DE TRANSPORT ET DE PESAGE PROTÉGÉ CONTRE LES MANIPULATIONS

(43) Veröffentlichungstag der Anmeldung: 01.07.2020
(73) Patentinhaber: Bizerba SE & Co. KG, 72336 Balingen (DE)
(72) Erfinder: Plocher, Thomas, 72172 Sulz am Neckar (DE)
(74) Vertreter: Huber, Meik

(56) Entgegenhaltungen:
- EP-A1- 2 796 045
- DE-A1-102007 021 393
- DE-A1-102013 203 456
- JP-A- 2008 285 182

## Beschreibung

Die vorliegende Erfindung betrifft eine Wäge-Fördervorrichtung mit einem Gestell, einem Wägeband und einem Zuführband zum Transport von zu wiegendem Stückgut. An dem Stückgut werden nach dem Wiegen in Förderrichtung abwärts von einer Bearbeitungsvorrichtung weitere Bearbeitungsschritte ausführt.

Die WO2014/131568A1 zeigt eine Wäge-Fördervorrichtung mit einem Wägeband und weiteren Förderbändern sowie mit einer Etikettiervorrichtung.

Die US9354104B2 zeigt eine Ausscheidebox eines Checkweighers, in die untergewichtige oder mit Metall verunreinigte Artikel aus einem Artikelstrom aussortiert werden.

Die DE 10 2007 021 393 A1 zeigt eine Wäge-Fördervorrichtung mit einem Wägeband, das in einem Reinigungsmodus betrieben werden kann und durch eine Eingreifschutzeinrichtung gesichert ist.

Die EP 2 796 045 A1 zeigt eine Fördervorrichtung zum Mischen und Bereitstellen sowie zum Transport von Backmischungen und Backzusatzstoffen.

Die JP 2008 285182 A zeigt einen Bottom-Etikettierer zum Etikettieren von Packungen von unten, während sie über eine Fördervorrichtung transportiert werden.

Die DE 10 2013 203 456 A1 zeigt eine Wäge-Fördervorrichtung mit einem Bottom-Etikettierer zum Etikettieren von Packungen von unten, während sie über die Fördervorrichtung transportiert werden.

Beiden Schriften gemein ist, dass sie in Förderrichtung an einer Stelle einen Gewichtswert eines Stückguts bestimmen und aufgrund seines Gewichtswertes das Stückgut in Förderrichtung abwärts an einer anderen Stelle weiterbearbeiten, zum Beispiel mit dem Gewichtswert oder mit einem vom Gewicht abhängigen Preis auszeichnen und etikettieren oder aufgrund des Gewichtswertes aussortieren, da zum Beispiel das minimale Gewicht unterschritten ist. Jedem Stückgut wird am Wägeband ein Gewichtswert zugeordnet, der über die weitere Bearbeitung entscheidet. Durch einen unsachgemäßen Eingriff eines Bedieners, der zum Beispiel auf dem Förderband zwischen Waage und Bearbeitungsstation zwei Stückgüter vertauscht, kann dieser Vorgang manipuliert werden.

Aufgabe der Erfindung ist es ein gattungsgemäßes System zu entwickeln, das manipulationssicherer ist.

Diese Aufgabe wird durch eine Wäge-Fördervorrichtung nach Anspruch 1 gelöst.

Erfindungsgemäß wird eine Wäge-Fördervorrichtung mit einem Gestell vorgeschlagen. Die Wäge-Fördervorrichtung trägt zumindest ein Wägeband und ein Zuführband zum Transport von zu wiegendem Stückgut. Das zu wiegende Stückgut ist zum Beispiel eine Lebensmittelverpackung, die mit einem gewichtsabhängigen Preis verkauft wird oder eine Lebensmittelverpackung mit Festgewicht. Das Stückgut kann auch ein anderer Artikel sein, der gewichtsabhängig mit einem Preis ausgezeichnet wird. Das Wägeband ist mit einer unterhalb des Wägebandes angeordneten Wägezelle gekoppelt, die das Gewicht des über das Wägeband transportierten Stückgutes bestimmt. Die Wäge-Fördervorrichtung umfasst in Förderrichtung dem Wägeband folgend mindestens ein weiteres Förderband. Außerdem umfasst die Wäge-Fördervorrichtung mindestens eine Bearbeitungsvorrichtung für das Stückgut. Zumindest eine der mindestens einen Bearbeitungsvorrichtung führt Bearbeitungsschritte aus, die in Verbindung mit dem durch die Wägezelle bestimmten Gewichtswert für das Stückgut stehen. Ein solcher Bearbeitungsschritt ist zum Beispiel das Etikettieren mit einem Etikett das den Gewichtswert oder einen vom Gewichtswert abhängigen Preis zeigt oder das Aussortieren eines untergewichtigen Stückguts, das heißt zum Beispiel einer Packung, die ein gewisses Minimalgewicht nicht aufweist. Die Wäge-Fördervorrichtung umfasst eine Zugriffssicherungsvorrichtung, die das dem Wägeband folgende Förderband in Förderrichtung zumindest teilweise abdeckt. Die Zugriffssicherungsvorrichtung ist derart ausgestaltet, dass ein Bediener zumindest nicht mit vernünftigem Aufwand das Stückgut auf den Förderbändern entnehmen oder verschieben oder dessen Reihenfolge ändern kann. Das hat den Vorteil, dass das Stückgut vor dem Zugriff des Bedieners oder der händischen Entnahme einzelner Stückgüter durch den Bediener geschützt ist. Da zwischen Gewichtsbestimmung auf dem Wägeband und der gewichtsabhängigen Bearbeitung des Stückgutes an einer Bearbeitungsvorrichtung ein gewisser Abstand ist, erhöht es die Manipulationssicherheit, wenn dieser Abstand vor unberechtigtem und unerwünschtem Zugriff geschützt ist. Natürlich ist die Zugriffssicherung im Wartungsfall zu entnehmen bzw. zu öffnen, jedoch ist dabei eine Manipulation des Ablaufes nicht möglich.

In einer Ausführungsform deckt die Zugriffssicherungsvorrichtung das dem Wägeband folgende Förderband mindestens in seiner Bandmitte und an seinem in Förderrichtung gesehenen Bandende ab. Das sich direkt ans Wägeband anschließende Förderband ist das Abführband. In anderen Ausführungsformen ist das dem Wägeband folgende Förderband das Förderband zu einem Metalldetektor oder zu einem Etikettierer. Das erste dem Wägeband folgende Förderband ist die erste Stelle der Förderstrecke, die derart manipuliert werden kann, das die Zuordnung zu den Gewichtsdaten verloren geht. In einer Ausführungsform ist das Förderband nicht in seinem Anfangsbereich abgedeckt, sondern erst ab seiner Bandmitte oder einige Zentimeter nach Bandbeginn. Beim Einfahren des Stückgutes unter die Abdeckung bildet sich ein Luftpolster unter der Abdeckung, das gegen das Stückgut selbst drückt. Ist die Abdeckung zu nahe am Wägeband, so kann dieses Luftpolster das Wiegeergebnis verschlechtern. Ist die Abdeckung auf dem Förderband, das sich an das Wägeband direkt anschließt, in Förderrichtung etwas zurückgesetzt, zum Beispiel bei einem kurzen Band bis in die Bandmitte, so ist das entstehende Luftpolster für das Wiegeergebnis nicht mehr relevant und die Wiegegenauigkeit bleibt erhalten.

In einer Ausführungsform ist die Zugriffssicherungsvorrichtung als ein Tunnel ausgebildet. In dem Tunnel läuft mindestens ein abgedeckter Förderbandabschnitt. Der Tunnel schützt den Förderbandabschnitt vor manuellem Zugriff von oben und von den beiden Seiten. In einer Ausführungsform ist der Tunnel aus einem vorderen Seitenteil und einem hinteren Seitenteil sowie einem oberen Teil ausgebildet. In einer Ausführungsform ist der Tunnel durch ein U-förmig geformtes längliches Bauteil ausgebildet.

In einer Ausführungsform ist der Tunnel eine mechanische Abdeckung und besteht aus Plattenmaterial oder Lochplattenmaterial. Die Lochplatten haben den Vorteil, dass Luft entweichen kann und so ein Überdruck im Tunnel durch eine schnelle Bewegung des Stückgutes auf den Förderbändern vermieden wird. Die Löcher der Lochplatten sind so klein dimensioniert, dass ein reinfassen durch einen Bediener oder eine Entnahme von Stückgütern durch die Löcher vermieden wird. In einer Ausführungsform sind die Abdeckungen und somit auch der Tunnel geformt aus einem Gitter, wie zum Beispiel einem Drahtgitter oder parallel verlaufenden Stäben. In einer Ausführungsform bilden Lichtschranken, die das Eingreifen detektieren, die Zugriffssicherungsvorrichtung. Sind mehrere Lichtschranken nebeneinander angeordnet, so entsteht ein virtueller Tunnel. Dieser hat den oben beschriebenen Nachteil der Entstehung eines Überdrucks, für den Fall, dass ein Stückgut in den Tunnel einfährt, nicht.

Erfindungsgemäß umfasst die Wäge-Fördervorrichtung mindestens eine Etikettiervorrichtung. Die Etikettiervorrichtung umfasst einen Top-Etikettierer. In einer Ausführungsform umfasst die Etikettiervorrichtung einen Bottom-Etikettierer. Ein Top-Etikettierer versieht das Stückgut auf dessen Oberseite mit einem Etikett, indem das Etikett von oben auf das Stückgut aufgedrückt wird. Ein Bottom-Etikettierer versieht das Stückgut auf dessen Unterseite mit einem Etikett, indem das Etikett in einen Zwischenraum zwischen zwei Förderbändern gespendet wird und auf dem Stückgut festklebt, wenn das Stückgut über das Etikett fährt. Im Falle eines Top-Etikettierers umfasst die Zugriffssicherungsvorrichtung eine Öffnung in der oberen Abdeckung, die groß genug ist, dass der Top-Etikettierer auf das Stückgut zugreifen kann um ein Etikett auf das Stückgut aufzubringen. Trotz dieser Öffnung wird der grundsätzliche Erfindungsgedanke, dass die Förderstrecke vor zugriffen geschützt ist, realisiert. Es ist für einen Bediener unmöglich, in diese Öffnung zu fassen, da sie im Vergleich zur Förderstrecke klein ist und im Bereich der Öffnung in regelmäßigen Abständen der Stempel des Etikettierers in die Abdeckung eingreift. Insofern bleibt der erfindungsgemäße Manipulationsschutz erhalten. Im Rahmen der Erfindung versteht sich eine Abdeckung, die einen Förderbandabschnitt abdeckt, auch als eine Abdeckung, die im Bereich eines Top-Etikettierers eine Öffnung zum Etikettieren von Stückgut von oben aufweist.

In einer Ausführungsform haben die Bearbeitungsschritte, die in Verbindung mit dem durch die Wägezelle bestimmten Gewichtswert stehen, einen gesetzlich relevanten Bezug. Das ist insbesondere der Fall, wenn es sich um metrologische Bestimmungen, Bestimmungen nach dem Eichgesetz, einer Verpackungsverordnung oder einer Lebensmittelsicherheitsverordnung handelt.

In einer Ausführungsform ist die Zugriffssicherungsvorrichtung der Wäge-Fördervorrichtung an allen Förderbändern abgebracht, die zwischen dem Wägeband und dem letzten Förderband, auf dem ein Bearbeitungsschritt ausgeführt wird, der mit dem von der Wägezelle bestimmten Gewichtswert oder einer gesetzlichen Vorschrift in Bezug steht, angebracht. Die Zugriffssicherungsvorrichtung deckt auch dieses letzte Förderband in Förderrichtung zumindest teilweise ab. In diesem Bereich soll eine Manipulation durch einen Bediener ausgeschlossen werden.

In einer Ausführungsform deckt die Zugriffssicherung das Wägeband zumindest teilweise ab.

In einer Ausführungsform ist die Wäge-Fördervorrichtung ein Preisauszeichner, ein Checkweigher oder ein Preisauszeichner oder Checkweigher mit Metalldetektor oder optischem Inspektionssystem. Die Zugriffssicherungsvorrichtung deckt auch Förderbänder ab, die zur Ausschleusvorrichtung des Metalldetektors oder des optischen Inspektionssystem und/oder des Checkweighers führen.

In einer Ausführungsform besteht die Zugriffssicherungsvorrichtung des Wägebandes aus einem Lichtgitter, einem Gitter oder Stäben. Das hat den Vorteil, dass das oben genannte Problem des Überdruckes wenn ein Stückgut auf einem Förderband in einen mechanisch geschlossenen Tunnel fährt, vermieden wird. Die Luft, die das Stückgut bei seiner Bewegung vor sich herschiebt, kann so auch im Bereich der Zugriffsicherungsvorrichtung im Bereich des Wägebandes entweichen. So müssen wegen der Zugriffssicherungsvorrichtung keine wiegetechnischen Nachteile in Kauf genommen werden.

In einer Ausführungsform besteht die Zugriffssicherungsvorrichtung aus mehreren Modulen. Die Module sind in Förderrichtung hintereinander aufgebaut. Die Module sind am Gestell oder an einer Abdeckung angebracht. In einer Ausführungsform hat die Wäge-Fördervorrichtung eine Vorrichtung um Anbauteile entlang der Förderstrecke anzubringen. Diese Vorrichtung trägt die Module. Es ist für die Erfindung unerheblich, ob die Zugriffssicherungsvorrichtung als ein langes Teil oder in mehreren modularen Abschnitten aufgebaut ist, da beide Lösungen das Ziel, nicht in dem Bereich zwischen Wägeband und Bearbeitungsvorrichtung entlang der Förderstrecke eingreifen zu können, verwirklichen können.

In einer Ausführungsform ist die Zugriffssicherungsvorrichtung im Bereich eines Metalldetektors oder eines optischen Systems das Gehäuse des Metalldetektors oder des optischen Systems. Die weiteren Module der Zugriffssicherungsvorrichtung sind am Gehäuse des Metalldetektors oder des optischen Systems angeschlagen.

In einer Ausführungsform umfasst die Wäge-Fördervorrichtung eine Steuerung und einen Detektor. Der Detektor detektiert einen Eingriff in einen durch die Lichtschranken der Zugriffssicherungsvorrichtung abgedeckten Bereich. Wird in diesen Bereich eingegriffen, das heißt, wird die Lichtschranke unterbrochen, so gibt der Detektor ein Detektorsignal aus. Die Steuerung steuert nach Empfang eines Detektorsignals die Wäge-Fördervorrichtung als Reaktion auf das Detektorsignal in einer bestimmten Weise. So setzt die Steuerung die Wäge-Fördervorrichtung still, stellt die Etikettiervorrichtung auf ungeeichten Auszeichnungszustand um und/oder verhindert das Applizieren eines bereits gedruckten Etiketts der Etikettiervorrichtung. All diesen Aktionen ist gemein, dass beim Eingriff in die Lichtschranken ein Manipulationsversuch vermutet wird und verhindert wird, dass eine aufgrund des Manipulationsversuches fehlerhafte Bearbeitung des Stückgutes stattfindet. Zum Beispiel ist ein ungeeichter Auszeichnungszustand auch dann erreicht, wenn ein Etikett auf dem Stückgut appliziert wird, das Etikett jedoch keine Gewichtsinformation und keine gewichtsabhängige Preisinformation umfasst. In einer Ausführungsform wird das Etikett in diesem Fall regulär gedruckt und appliziert, jedoch werden die Gewichtsinformation und die gewichtsabhängige Preisinformation nicht auf das Etikett aufgedruckt.

Einige Ausführungsformen der Erfindung sind in den Zeichnungen beispielhaft gezeigt und nachfolgend beschrieben. Es zeigen, jeweils in schematischer Darstellung:
- Fig. 1: eine Wäge-Fördervorrichtung nach dem Stand der Technik,
- Fig. 2: eine erfindungsgemäße Wäge-Fördervorrichtung in einer ersten Ausführungsform,
- Fig. 3: eine erfindungsgemäße Wäge-Fördervorrichtung in einer zweiten Ausführungsform,
- Fig. 4: eine erfindungsgemäße Wäge-Fördervorrichtung in einer dritten Ausführungsform,
- Fig. 5: eine erfindungsgemäße Wäge-Fördervorrichtung in einer vierten Ausführungsform,
- Fig. 6: eine erfindungsgemäße Wäge-Fördervorrichtung in einer fünften Ausführungsform, und
- Fig. 7: eine erfindungsgemäße Wäge-Fördervorrichtung in einer sechsten Ausführungsform.

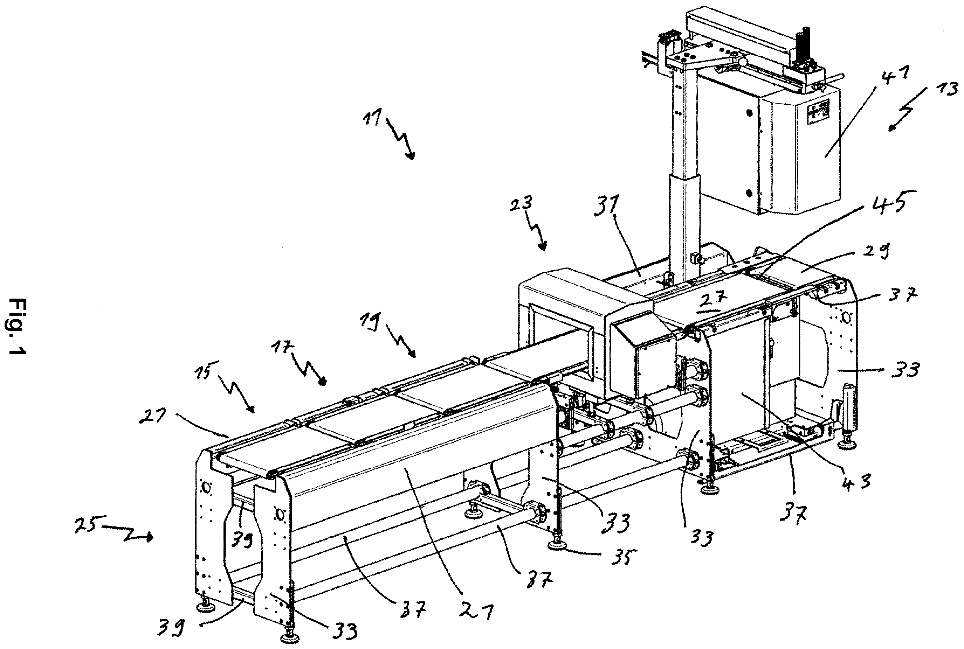

Die in Figur 1 dargestellte Vorrichtung zeigt eine Wäge-Fördervorrichtung 11 wie sie aus dem Stand der Technik bekannt ist. Die Wäge-Fördervorrichtung 11 hat ein Zuführband 15, ein Wägeband 17, ein Abführband 19, einen Metalldetektor 23 und eine Druck- und Etikettiervorrichtung 13 mit einem ersten Förderband 27 und einem zweiten Förderband 29. Die Druck- und Etikettiervorrichtung 13 umfasst einen Top-Etikettierer 41, der Packungen auf dem ersten Förderband 27 von oben mit einem bedruckten Etikett versieht. Die Druck- und Etikettiervorrichtung 13 umfasst ferner einen Bottom-Etikettierer 43, der ein Etikett in den Abstand zwischen dem ersten Förderband 27 und dem zweiten Förderband 29 spendet und so die Packung mit einem bedruckten Etikett auf der Unterseite versieht, wenn sie über den Spalt zwischen dem ersten Förderband 27 und dem zweiten Förderband 29 der Druck- und Etikettiervorrichtung 13 befördert wird. Das Wägeband 17 ist mit einer unterhalb des Wägebandes 17 angeordneten, nicht dargestellten Wägezelle gekoppelt, die dazu ausgelegt ist, das Gewicht eines sich über das Wägeband 17 bewegenden Stückguts zu bestimmen. Wägeband 17 und Wägezelle bilden eine Wägeplattform, die als Kontrollwaage bzw. Checkweigher oder als Preisauszeichner ausgebildet sein kann. Zu beiden Seiten der drei Transportbänder 15, 17, 19 sind Schmutzabweisbleche 21 vorgesehen.

Im Betrieb der Wäge-Fördervorrichtung 11 werden zu verwiegende Packungen von dem Zuführband 15 an das Wägeband 17 übergeben, dort gewogen und über das Abführband 19 an ein Transportband des Metalldetektors 23 weitertransportiert. Anschließend werden die Packungen von der Druck- und Etikettiervorrichtung 13 übernommen und mit einem Etikett versehen, das zuvor mit dem von der Wägezelle für die jeweilige Packung ermittelten Gewicht, einem dazugehörigen Preis, einem Haltbarkeitsdatum, Produktinformationen oder Werbung bedruckt wurde. Der Metalldetektor 23 kann auch weggelassen werden, oder anstelle des Metalldetektors 23 oder zusätzlich hierzu kann auch beispielsweise eine Sortiereinrichtung vorgesehen sein.

Darüber hinaus umfasst die Wäge-Fördervorrichtung 11 ein Gestell 25, auf dem sich das Zuführband 15, das Wägeband 17 mit der Wägezelle, das Abführband 19, der Metalldetektor 23 mit zugehörigem Transportband und die beiden Förderbänder 27, 29 der Druck- und Etikettiervorrichtung 13 abstützen. Das Gestell 25 umfasst mehrere Seitenwangen 33, die im Bereich des Zuführbands 15, des Wägebandes 17, des Abführbandes 19 und des Metalldetektors 23, d.h. im Bereich eines Wägemoduls und eines Metalldetektormoduls des Gestells, über jeweils mehrere als Rundrohre ausgebildete Längsträger 37 fest miteinander verbunden sind. Die Seitenwangen 33 des Wägemoduls sind jeweils zweiteilig ausgebildet, wobei die beiden jeweiligen Seitenwangenteile über als Vierkantrohre ausgebildete Querträger 39, die an den Innenseiten der Seitenwangenteile 33 vorgesehen sind, miteinander verbunden sind. An die Seitenwangen 33 sind jeweils zwei Standfüße 35 angeschraubt, die unabhängig voneinander höhenverstellbar sind.

Im Bereich der Druck- und Etikettiervorrichtung 13 ist in der Ansicht gemäß Figur 1 an der Rückseite des Gestells 25 ein Schaltschrank 31 für die Steuerung der Wäge-Fördervorrichtung 11 vorgesehen.

In den weiteren Zeichnungen sind gleiche Bauteile mit gleichen Bezugszeichen bezeichnet und werden nachfolgend nicht noch einmal separat beschrieben. Auf die jeweils vorangegangene Beschreibung der Bauteile wird verwiesen.

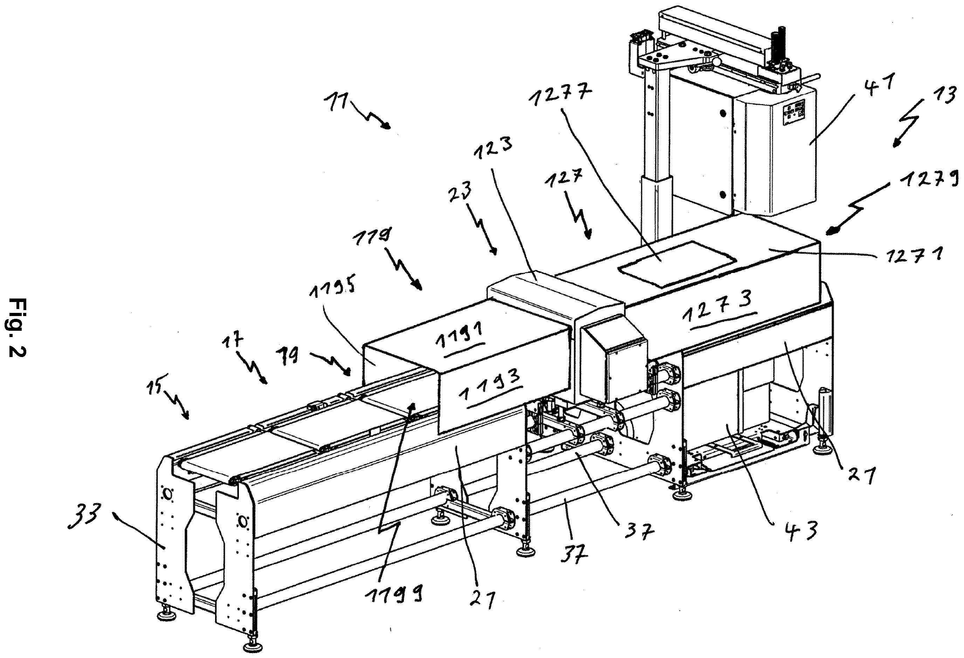

Figur 2 zeigt eine erfindungsgemäße Wäge-Fördervorrichtung nach einer ersten Ausführungsform. Die Wäge-Fördervorrichtung umfasst ein erstes Modul einer Zugriffssicherungsvorrichtung 119, welche aus einer vorderen und einer hinteren Seitenplatte 1193, 1195 und einer oberen Platte 1191 besteht. Die Platten bilden einen länglichen Tunnel, der das Abführband 19 in seiner zweiten Hälfte abdeckt. Das Abführband 19 ist das sich an das Wägeband 17 anschließende Förderband in Förderrichtung. Stückgüter die vom Wägeband 17 auf das Abführband 19 transportiert werden, fahren in die Eingangsöffnung 1199 der Zugriffssicherungsvorrichtung ein und sind dann vor dem unerlaubten Zugriff eines Bedieners geschützt. Ausgangsseitig ist die Zugriffssicherungsvorrichtung an dem Gehäuse 123 des Metalldetektors 23 angeschlagen. Das Gehäuse 123 des Metalldetektors 23 bildet im Bereich des Metalldetektors 23 selbst die Zugriffsschutzvorrichtung. In Förderrichtung abwärts nach dem Metalldetektor 23 befindet sich ein zweites Modul der Zugriffsschutzvorrichtung 127, das ebenfalls aus einer vorderen und einer hinteren Seitenplatte 1273 und einer oberen Platte 1271 besteht. Die obere Platte 1171 weist im Bereich des Top-Etikettierers 41, an der Stelle, an der der Stempel des Top-Etikettierers 41 das Etikett auf das Stückgut appliziert, eine Öffnung 1277 auf. Die Öffnung 1277 umfasst nur die für den Zweck der Etikettierung notwendige Geometrie. In der Zeichnung ist sie jedoch aus Gründen der besseren Sichtbarkeit relativ groß dargestellt. Nach dem Etikettiervorgang verlässt das Stückgut über das letzte Förderband 29 der der Druck- und Etikettiervorrichtung 13 die Zugriffsschutzvorrichtung 127 durch die Ausgangsöffnung 1279. In der Praxis schließen sich dann weitere Förderbänder zur Logistik des Stückguts an.

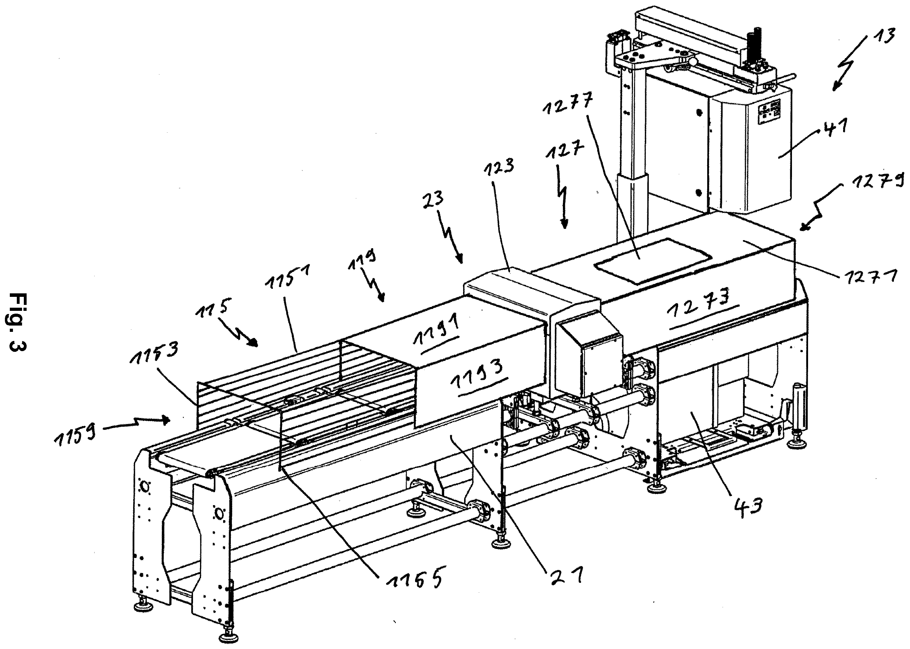

Figur 3 zeigt eine erfindungsgemäße Wäge-Fördervorrichtung in einer zweiten Ausführungsform. Zusätzlich zur ersten Ausführungsform sind hier das Wägeband 17 und der in Förderrichtung hintere Teil des Zuführband 15 mit einer Zugriffsschutzvorrichtung 115 abgedeckt. Die Zugriffsschutzvorrichtung 115 umfasst einen Träger 1153, der in seinem Querschnitt dem der nachfolgenden Zugriffsschutzvorrichtung 119 entspricht und an Befestigungspunkten 1155 an den Schmutzabweisblechen 21 oder am Gestell angebracht ist. Der Rahmen trägt mehrere parallel entlang der Förderrichtung verlaufende Stäbe 1151, die auf der nachfolgenden Zugriffsschutzvorrichtung 119 abgestützt sind. Natürlich können die Stäbe 1151 auch auf einem zweiten separaten Träger in diesem Bereich abgestützt sein. Die Eingangsöffnung 1159 der Zugriffsschutzvorrichtung 115 befindet sich somit vor dem Wägeband 17. Durch die Ausführung der Zugriffsschutzvorrichtung 115 im Bereich des Wägebandes 17 mit Stäben entsteht kein Problem von einem durch Überdruck verfälschten Wiegeergebnis. Gleiches ist richtig, wenn für die Zugriffsschutzvorrichtung anstatt Stäben 1151 ein Gitter verwendet wird.

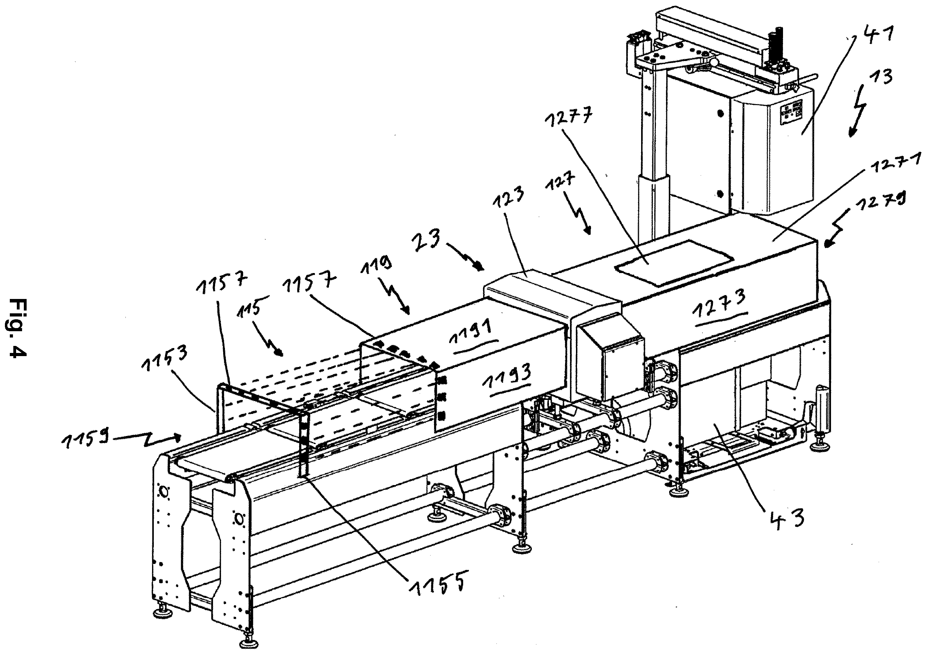

Figur 4 zeigt eine erfindungsgemäße Wäge-Fördervorrichtung in einer dritten Ausführungsform. Im Vergleich zur zweiten Ausführungsform ist die Zugriffsschutzvorrichtung 115 des Wägebandes 17 und des in Förderrichtung hinteren Teils des Zuführbandes mithilfe von Lichtschranken 1157 realisiert. Die Lichtschranken 1157 bestehen aus einem Sender-Empfängerpaar. Der Sender sendet ein Lichtsignal aus und der Empfänger prüft dessen Vorhandensein. Ist beim Empfänger kein Lichtsignal vorhanden, so wird ein Eingriff in den Pfad zwischen Sender und Empfänger von einem Detektor detektiert, der ein Detektorsignal an die Steuerung der Wäge-Fördervorrichtung weitergeleitet wird. Insofern verhindert die Zugriffsschutzvorrichtung 115, die auf Lichtschranken 1157 basiert, nicht den manuellen Zugriff auf ein Förderband. Sie kann jedoch den manuellen Zugriff auf ein Förderband detektieren und an eine Steuerung melden. Von der Steuerung wird infolge des Signals der Lichtschranken 1157 eine entsprechende Aktion umgesetzt, zum Beispiel wird die Wäge-Fördervorrichtung stillgesetzt, die Etikettiervorrichtung wird in einen ungeeichten Auszeichnungszustand versetzt und/oder das Applizieren eines bereits gedruckten Etiketts der Etikettiervorrichtung wird verhindert. Die Lichtschranken 1157 sind im vorderen Bereich auf einem Träger 1153 angebracht. Der Träger 1153 ist seinerseits an Befestigungspunkten 1155 an den Schmutzabweisblechen 21 oder am Gestell angebracht. Im hinteren Bereich sind die Lichtschranken auf der folgenden Zugriffsschutzvorrichtung 119 angebracht. Die Lichtschranken 1157 sind so angeordnet, dass ein Lichtgitter entsteht, in das nicht gefasst werden kann, ohne wenigstens eine der Lichtschranken 1157 auszulösen.

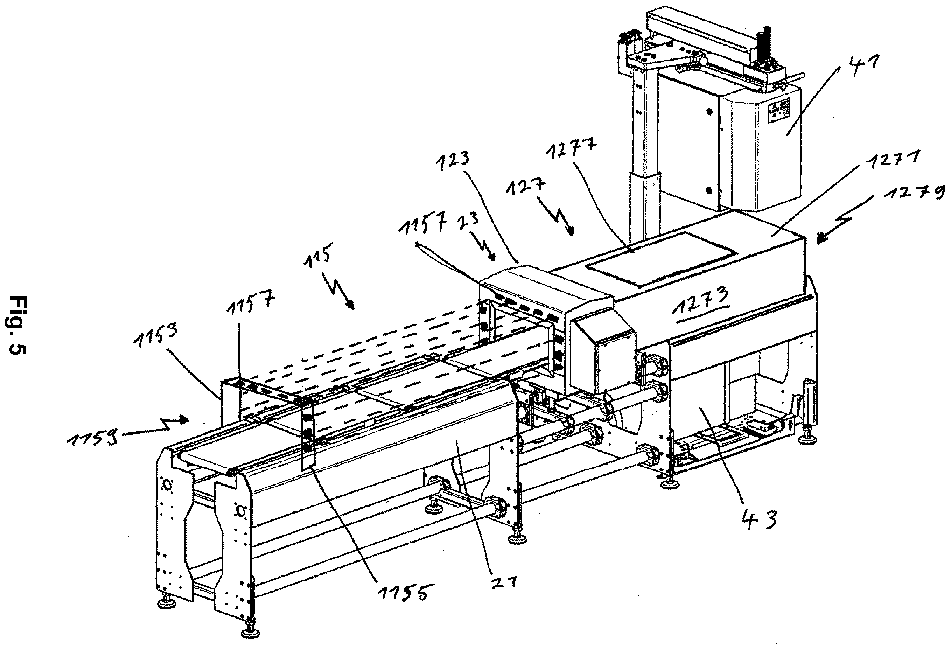

Figur 5 zeigt eine erfindungsgemäße Wäge-Fördervorrichtung in einer vierten Ausführungsform. Im Vergleich zur dritten Ausführungsform ist die Zugriffsschutzvorrichtung 115 des Wägebandes 17 und des in Förderrichtung hinteren Teils des Zuführbandes sowie der dem Wägeband bis zum Gehäuse 123 des Metalldetektors 23 folgenden Förderbänder mithilfe von Lichtschranken 1157 realisiert. Die Lichtschranken 1157 bilden ein Lichtgitter vom Träger 1153, der auf Höhe des Zuführbandes 15 an Befestigungspunkten 1155 an den Schmutzabweisblechen 21 oder am Gestell angebracht ist, bis hin zum Gehäuse 123 des Metalldetektors 23. Die Lichtschranken 1157 sind entsprechend auf dem Träger 1153 und am Gehäuse 123 des Metalldetektors 23 angebracht.

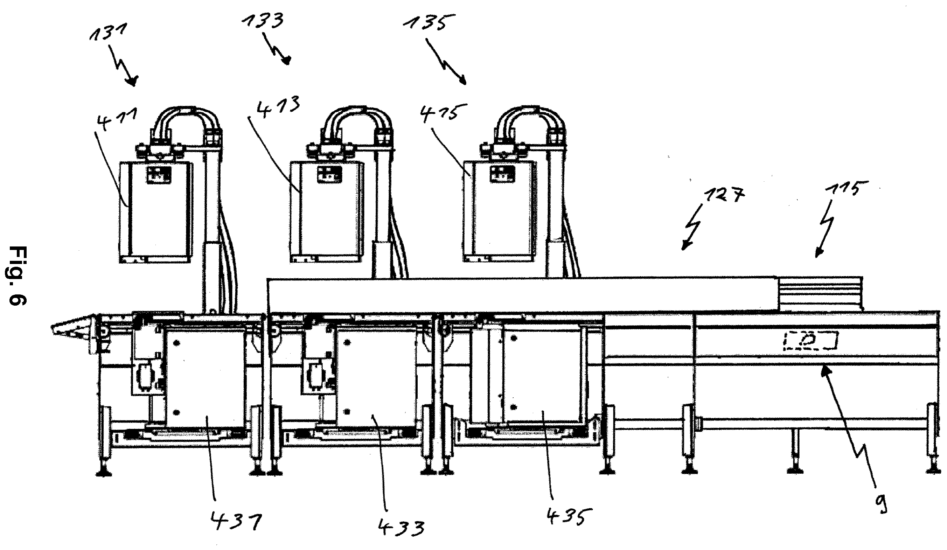

Figur 6 zeigt eine erfindungsgemäße Wäge-Fördervorrichtung in einer fünften Ausführungsform in der Seitenansicht. Im Vergleich zu den vorangegangenen Ausführungsformen umfasst die Wäge-Fördervorrichtung drei Druck- und Etikettiervorrichtungen 131, 133, 135. Die Druck- und Etikettiervorrichtungen 131, 133, 135 umfassen jeweils einen Top-Etikettierer 411, 413, 415, die Packungen von oben mit einem bedruckten Etikett versehen. Die Druck- und Etikettiervorrichtungen 131, 133, 135 umfassen ferner jeweils einen Bottom-Etikettierer 431, 433, 435, die ein Etikett jeweils in den Abstand zwischen zwei Förderbändern spenden und so die Packungen mit einem bedruckten Etikett auf der Unterseite versehen. Die Zugriffssicherungsvorrichtung ist modular aufgebaut. Das erste Modul der Zugriffssicherungsvorrichtung 115 im Bereich des Wägebandes ist aus zur Förderrichtung parallel verlaufenden Stäben aufgebaut. Das zweite Modul der Zugriffssicherungsvorrichtung 127 deckt die Förderbänder dem Wägeband folgend bis hin zur zweiten Druck- und Etikettiervorrichtung 133 ab. Dieser Bereich ist vor manuellem Zugriff geschützt. So werden zum Beispiel bei der ersten Druck- und Etikettiervorrichtung 135 gesetzlich relevanten Daten, wie zum Beispiel ein gewichtsabhängiges Preisetikett, und in der zweiten Druck- und Etikettiervorrichtung 133 weitere gesetzliche relevante Daten, wie zum Beispiel ein Etikett mit dem Haltbarkeitsdatum, gedruckt. An der dritten Druck- und Etikettiervorrichtung 131 werden zum Beispiel Werbeetiketten gedruckt und auf das Stückgut appliziert, die keine gesetzliche Relevanz haben und keiner Kontrolle unterliegen. Aus diesem Grund ist der Förderbereich von der zweiten Druck- und Etikettiervorrichtung 133 hin zur dritten Druck- und Etikettiervorrichtung 131 nicht mehr mit einer Zugriffssicherungsvorrichtung ausgestattet.

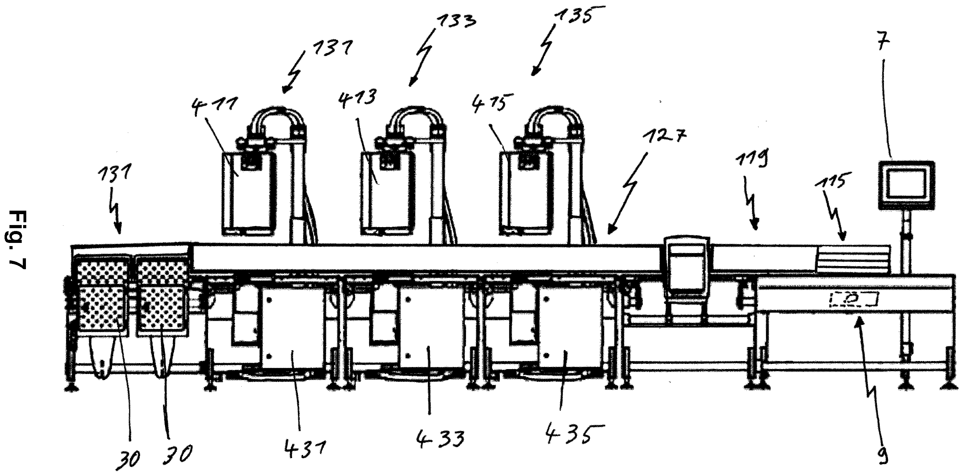

Figur 7 zeigt eine erfindungsgemäße Wäge-Fördervorrichtung in einer sechsten Ausführungsform. Im Vergleich zur fünften Ausführungsform umfasst die Zugriffssicherungsvorrichtung vier Module. Das erste Modul der Zugriffssicherungsvorrichtung 115 deckt den Bereich des Wägebandes ab. Das zweite Modul der Zugriffssicherungsvorrichtung deckt den Bereich dem Wägeband folgend bis hin zum Metalldetektor ab. Die Ausführung entspricht insoweit der Beschreibung mit Bezug zur zweiten Ausführungsform. Dem Metalldetektor folgend umfasst die Wäge-Fördervorrichtung drei Druck- und Etikettiervorrichtungen 131, 133, 135. Die Druck- und Etikettiervorrichtungen 131, 133, 135 umfassen jeweils einen Top-Etikettierer 411, 413, 415, die Packungen von oben mit einem bedruckten Etikett versehen. Die Druck- und Etikettiervorrichtungen 131, 133, 135 umfassen ferner jeweils einen Bottom-Etikettierer 431, 433, 435, die ein Etikett jeweils in den Abstand zwischen zwei Förderbändern spenden und so die Packungen mit einem bedruckten Etikett auf der Unterseite versehen. Den drei Druck- und Etikettiervorrichtungen 131, 133, 135 folgend umfasst die Wäge-Fördervorrichtung zwei Ausschleusevorrichtungen 30, in denen zum Beispiel untergewichtige Packungen oder mit Metall verunreinigte Packungen ausgeschleust werden. Das dritte Modul der Zugriffssicherungsvorrichtung 127 deckt den Bereich der Förderstrecke zwischen Metalldetektor und inklusive der dritten Druck- und Etikettiervorrichtung 131 ab. Das vierte Modul der Zugriffssicherungsvorrichtung 131 deckt den Bereich der Ausschleusevorrichtungen 30 ab. Ein manueller Zugriff auf die Förderbänder ist vom Wägeband an bis hin zu den Ausschleusevorrichtungen 30 nicht möglich. Figur 7 zeigt die ebenfalls in den anderen Ausführungsformen vorhandene Steuerung 7.

Die Funktionen verschiedener in den Zeichnungen gezeigter Elemente, inklusive der Funktionsblöcke, können durch dezidierte Hardware oder durch generische Hardware, die in der Lage ist Software auszuführen, im Zusammenhang mit der entsprechenden Software, realisiert werden. Falls die Funktionen mittels eines Prozessors zur Verfügung gestellt werden, können sie durch einen einzigen dezidierten Prozessor, einen einzigen geteilten Prozessor oder mehrere generische Prozessoren, die wiederum geteilt sein können, zur Verfügung gestellt werden. Die Funktionen können, ohne Einschränkung, durch einen digital signal processor (DSP), Netzwerk Prozessor, application specific integrated circuit (ASIC), field programmable gate array (FPGA), read only memory (ROM) mit gespeicherter Software, random access memory (RAM), und nichtflüchtige Speicher zur Verfügung gestellt werden.

## Patentansprüche

1. Wäge-Fördervorrichtung (11) mit einem Gestell (33, 37, 39), welches zumindest ein Wägeband (17) und ein Zuführband (15) zum Transport von zu wiegendem Stückgut trägt, wobei das Wägeband (17) mit einer unterhalb des Wägebandes angeordneten Wägezelle (9) gekoppelt ist, wobei die Wäge-Fördervorrichtung (11) in Förderrichtung dem Wägeband (17) folgend mindestens ein weiteres Förderband (19, 27, 29) und mindestens eine Bearbeitungsvorrichtung (13, 23, 41, 43) für das Stückgut umfasst, wobei zumindest eine der mindestens einen Bearbeitungsvorrichtung (13, 23, 41, 43) Bearbeitungsschritte ausführt, die in Verbindung mit dem durch die Wägezelle bestimmten Gewichtswert für das Stückgut stehen, wobei die Wäge-Fördervorrichtung (11) eine Zugriffssicherungsvorrichtung (115, 119, 127, 131, 1151, 1153, 1155, 1157, 1191, 1193, 1271, 1273) umfasst, die das dem Wägeband (17) folgende Förderband (19) in Förderrichtung zumindest teilweise abdeckt, **dadurch gekennzeichnet, dass** die Wäge-Fördervorrichtung (11) mindestens eine Etikettiervorrichtung (13) mit einem Top-Etikettierer (41) umfasst, wobei die Zugriffssicherungsvorrichtung (115, 119, 127, 131, 1151, 1153, 1155, 1157, 1191, 1193, 1271, 1273) eine Öffnung (1277) in einer oberen Abdeckung (1271) in dem Bereich hat, in dem der Top-Etikettierer (41) auf das Stückgut zugreift, um ein Etikett auf das Stückgut aufzubringen.

2. Wäge-Fördervorrichtung nach Anspruch 1, **dadurch gekennzeichnet, dass** die Zugriffssicherungsvorrichtung (115, 119, 127, 131, 1151, 1153, 1155, 1157, 1191, 1193, 1271, 1273) das dem Wägeband (17) folgende Förderband (19) mindestens in seiner Bandmitte und an seinem in Förderrichtung gesehenen Bandende abdeckt.

3. Wäge-Fördervorrichtung nach Anspruch 1 oder 2, **dadurch gekennzeichnet, dass** die Zugriffssicherungsvorrichtung (115, 119, 127, 131, 1151, 1153, 1155, 1157, 1191, 1193, 1271, 1273) als ein Tunnel ausgebildet ist, in dem mindestens ein abgedeckter Förderbandabschnitt läuft und der den Förderbandabschnitt vor manuellem Zugriff von oben und von den beiden Seiten schützt.

4. Wäge-Fördervorrichtung nach einem der Ansprüche 1 bis 3, **dadurch gekennzeichnet, dass** die Wäge-Fördervorrichtung (11) mindestens eine Etikettiervorrichtung (13) mit einem Bottom-Etikettierer (43) umfasst.

5. Wäge-Fördervorrichtung nach einem der Ansprüche 1 bis 4, **dadurch gekennzeichnet, dass** die in Verbindung mit dem durch die Wägezelle (9) bestimmten Gewichtswert stehenden Bearbeitungsschritte einen gesetzlich, insbesondere nach metrologischen Bestimmungen, dem Eichgesetz, einer Verpackungsverordnung oder einer Lebensmittelsicherheitsverordnung, relevanten Bezug haben.

6. Wäge-Fördervorrichtung nach einem der Ansprüche 1 bis 5, **dadurch gekennzeichnet, dass** die Zugriffssicherungsvorrichtung (115, 119, 127, 131, 1151, 1153, 1155, 1157, 1191, 1193, 1271, 1273) der Wäge-Fördervorrichtung (11) an allen Förderbändern (19, 27) abgebracht ist, die zwischen dem Wägeband (17) und dem letzten Förderband (29), auf dem ein Bearbeitungsschritt ausgeführt wird, der mit dem von der Wägezelle (9) bestimmten Gewichtswert oder einer gesetzlichen Vorschrift in Bezug steht, angebracht ist und die Zugriffssicherungsvorrichtung (115, 119, 127, 131, 1151, 1153, 1155, 1157, 1191, 1193, 1271, 1273) auch dieses letzte Förderband (29) in Förderrichtung zumindest teilweise abdeckt.

7. Wäge-Fördervorrichtung nach einem der Ansprüche 1 bis 6, **dadurch gekennzeichnet, dass** die Zugriffssicherung (115, 119, 127, 131, 1151, 1153, 1155, 1157, 1191, 1193, 1271, 1273) das Wägeband (17) zumindest teilweise abdeckt.

8. Wäge-Fördervorrichtung nach einem der Ansprüche 1 bis 7, **dadurch gekennzeichnet, dass** die Zugriffssicherungsvorrichtung (115, 119, 127, 131, 1151, 1153, 1155, 1157, 1191, 1193, 1271, 1273) aus einer oder mehreren Lichtschranken oder aus einer mechanischen Abdeckung, insbesondere aus Platten, Lochplatten, einem Gitter oder Stäben besteht.

9. Wäge-Fördervorrichtung nach einem der Ansprüche 1 bis 8, **dadurch gekennzeichnet, dass** die Wäge-Fördervorrichtung (11) ein Preisauszeichner, ein Checkweigher oder ein Preisauszeichner oder Checkweigher mit Metalldetektor (23) oder optischem Inspektionssystem ist und dass die Zugriffssicherungsvorrichtung auch Förderbänder abgedeckt, die zur Ausschleusevorrichtung (30) des Metalldetektors (23) oder optischen Inspektionssystem und/oder des Checkweighers führen.

10. Wäge-Fördervorrichtung nach einem der Ansprüche 1 bis 9, **dadurch gekennzeichnet, dass** die Zugriffssicherungsvorrichtung des Wägebandes (17) aus einem Lichtgitter, einem Gitter oder Stäben besteht.

11. Wäge-Fördervorrichtung nach einem der Ansprüche 1 bis 10, **dadurch gekennzeichnet, dass** die Zugriffssicherungsvorrichtung (115, 119, 127, 131, 1151, 1153, 1155, 1157, 1191, 1193, 1271, 1273) aus mehreren Modulen besteht (115, 119, 127, 131), die hintereinander in Förderrichtung auf der Wäge-Fördervorrichtung (11) aufgebaut sind.

12. Wäge-Fördervorrichtung nach einem der Ansprüche 1 bis 11, **dadurch gekennzeichnet, dass** die Zugriffssicherungsvorrichtung (115, 119, 127, 131, 1151, 1153, 1155, 1157, 1191, 1193, 1271, 1273) im Bereich eines Metalldetektors (23) oder eines optischen Systems das Gehäuse des Metalldetektors (123) oder des optischen Systems und eine daran angeschlagene Zugriffssicherungsvorrichtung (115, 119, 127, 131, 1151, 1153, 1155, 1157, 1191, 1193, 1271, 1273) ist.

13. Wäge-Fördervorrichtung nach einem der Ansprüche 1 bis 11, **dadurch gekennzeichnet, dass** die Wäge-Fördervorrichtung (11) eine Steuerung (7) und einen Detektor umfasst, wobei der Detektor einen Eingriff in einen durch die Lichtschranken (1157) der Zugriffssicherungsvorrichtung (115) abgedeckten Bereich detektiert und ein Detektorsignal ausgibt, und wobei die Steuerung (7) nach Empfang eines Detektorsignals die Wäge-Fördervorrichtung stillsetzt, die Etikettiervorrichtung in einen ungeeichten Auszeichnungszustand versetzt und/oder das Applizieren eines bereits gedruckten Etiketts der Etikettiervorrichtung verhindert.

## Claims

1. Conveyor weighing device (11) with a framework (33, 37, 39), which carries at least one weighing belt (17) and a feeding belt (15) for transporting items to be weighed, wherein the weighing belt (17) is coupled to a weighing cell (9) arranged underneath the weighing belt, wherein the conveyor weighing device (11) comprises, following the weighing belt (17) in the conveying direction, at least one further conveying belt (19, 27, 29) and at least one processing device (13, 23, 41, 43) for the items, wherein at least one of the at least one processing devices (13, 23, 41, 43) performs processing steps that relate to the value of the weight of the items determined by the weighing cell, wherein the conveyor weighing device (11) comprises an access control device (115, 119, 127, 131, 1151, 1153, 1155, 1157, 1191, 1193, 1271, 1273), which in the conveying direction at least partially covers the conveying belt (19) following the weighing belt (17), **characterized in that** the conveyor weighing device (11) comprises at least one labelling device (13) with a top labeller (41), wherein the access control device (115, 119, 127, 131, 1151, 1153, 1155, 1157, 1191, 1193, 1271, 1273) has an opening (1277) in an upper covering (1271) in the region in which the top labeller (41) accesses the items in order to apply a label to the items.

2. Conveyor weighing device according to Claim 1, **characterized in that** the access control device (115, 119, 127, 131, 1151, 1153, 1155, 1157, 1191, 1193, 1271, 1273) covers the conveying belt (19) following the weighing belt (17) at least in its belt middle and at its belt end, seen in the conveying direction.

3. Conveyor weighing device according to Claim 1 or 2, **characterized in that** the access control device (115, 119, 127, 131, 1151, 1153, 1155, 1157, 1191, 1193, 1271, 1273) is formed as a tunnel in which at least one covered section of the conveying belt runs and which protects the section of the conveying belt from manual access from above and from the two sides.

4. Conveyor weighing device according to one of Claims 1 to 3, **characterized in that** the conveyor weighing device (11) comprises at least one labelling device (13) with a bottom labeller (43).

5. Conveyor weighing device according to at least one of Claims 1 to 4, **characterized in that** the processing steps relating to the value of the weight determined by the weighing cell (9) have a legally relevant basis, in particular as provided by metrological specifications, weights and measures law, packaging regulations or food safety regulations.

6. Conveyor weighing device according to one of Claims 1 to 5, **characterized in that** the access control device (115, 119, 127, 131, 1151, 1153, 1155, 1157, 1191, 1193, 1271, 1273) of the conveyor weighing device (11) is attached on all conveying belts (19, 27) that are attached between the weighing belt (17) and the last conveying belt (29) on which a processing step based on the value of the weight determined by the weighing cell (9) or a legal stipulation is performed and the access control device (115, 119, 127, 131, 1151, 1153, 1155, 1157, 1191, 1193, 1271, 1273) also at least partially covers this last conveying belt (29) in the conveying direction.

7. Conveyor weighing device according to one of Claims 1 to 6, **characterized in that** the access control (115, 119, 127, 131, 1151, 1153, 1155, 1157, 1191, 1193, 1271, 1273) at least partially covers the weighing belt (17).

8. Conveyor weighing device according to one of Claims 1 to 7, **characterized in that** the access control device (115, 119, 127, 131, 1151, 1153, 1155, 1157, 1191, 1193, 1271, 1273) consists of one or more light barriers or a mechanical covering, in particular made up of plates, perforated plates, a grid or bars.

9. Conveyor weighing device according to one of Claims 1 to 8, **characterized in that** the conveyor weighing device (11) is a price marker, a check weigher or a price marker or check weigher with a metal detector (23) or an optical inspection system and **in that** the access control device also covers conveying belts that lead to the ejecting device (30) of the metal detector (23) or optical inspection system and/or of the check weigher.

10. Conveyor weighing device according to one of Claims 1 to 9, **characterized in that** the access control device of the weighing belt (17) consists of a light grid, a grid or bars.

11. Conveyor weighing device according to one of Claims 1 to 10, **characterized in that** the access control device (115, 119, 127, 131, 1151, 1153, 1155, 1157, 1191, 1193, 1271, 1273) consists of a number of modules (115, 119, 127, 131), which are constructed on the conveyor weighing device (11) one behind the other in the conveying direction.

12. Conveyor weighing device according to one of Claims 1 to 11, **characterized in that** the access control device (115, 119, 127, 131, 1151, 1153, 1155, 1157, 1191, 1193, 1271, 1273) in the region of a metal detector (23) or an optical system is the housing of the metal detector (123) or of the optical system and is an access control device (115, 119, 127, 131, 1151, 1153, 1155, 1157, 1191, 1193, 1271, 1273) fastened thereto.

13. Conveyor weighing device according to one of Claims 1 to 11, **characterized in that** the conveyor weighing device (11) comprises a controller (7) and a detector, wherein the detector detects an intervention in a region covered by the light barriers (1157) of the access control device (115) and emits a detector signal, and wherein, after receiving a detector signal, the controller (7) stops the conveyor weighing device, switches the labelling device to an uncalibrated marking state and/or prevents an already printed label from being applied by the labelling device.

## Revendications

1. Dispositif de transport et de pesage (11) comprenant un châssis (33, 37, 39), qui porte au moins une bande de pesage (17) et une bande d'amenée (15) pour l'acheminement d'un article à peser, la bande de pesage (17) étant couplée à une cellule de pesage (9) agencée en dessous de la bande de pesage, le dispositif de transport et de pesage (11) comprenant, à la suite de la bande de pesage (17) dans la direction de transport, au moins une autre bande de transport (19, 27, 29) et au moins un dispositif de traitement (13, 23, 41, 43) pour l'article, au moins un des au moins un dispositif de traitement (13, 23, 41, 43) exécutant des étapes de traitement qui sont en relation avec la valeur de poids pour l'article déterminée par la cellule de pesage, le dispositif de transport et de pesage (11) comprenant un dispositif de sécurité anti-accès (115, 119, 127, 131, 1151, 1153, 1155, 1157, 1191, 1193, 1271, 1273) qui recouvre au moins partiellement la bande de transport (19) suivant la bande de pesage (17) dans la direction de transport, **caractérisé en ce que** le dispositif de transport et de pesage (11) comprend au moins un dispositif d'étiquetage (13) comprenant une étiqueteuse supérieure (41), le dispositif de sécurité anti-accès (115, 119, 127, 131, 1151, 1153, 1155, 1157, 1191, 1193, 1271, 1273) ayant une ouverture (1277) dans un recouvrement supérieur (1271) dans la zone où l'étiqueteuse supérieure (41) accède à l'article pour appliquer une étiquette sur l'article.

2. Dispositif de transport et de pesage selon la revendication 1, **caractérisé en ce que** le dispositif de sécurité anti-accès (115, 119, 127, 131, 1151, 1153, 1155, 1157, 1191, 1193, 1271, 1273) recouvre la bande de transport (19) suivant la bande de pesage (17) au moins dans son milieu de bande et à son extrémité vue dans la direction de transport.

3. Dispositif de transport et de pesage selon la revendication 1 ou 2, **caractérisé en ce que** le dispositif de sécurité anti-accès (115, 119, 127, 131, 1151, 1153, 1155, 1157, 1191, 1193, 1271, 1273) est configuré sous la forme d'un tunnel dans lequel passe au moins une section de bande de transport recouverte et qui protège la section de bande de transport contre l'accès manuel par le haut et par les deux côtés.

4. Dispositif de transport et de pesage selon l'une quelconque des revendications 1 à 3, **caractérisé en ce que** le dispositif de transport et de pesage (11) comprend au moins un dispositif d'étiquetage (13) comprenant une étiqueteuse inférieure (43).

5. Dispositif de transport et de pesage selon l'une quelconque des revendications 1 à 4, **caractérisé en ce que** les étapes de traitement en relation avec la valeur de poids déterminée par la cellule de pesage (9) ont une référence légale, en particulier selon des spécifications métrologiques, la loi sur les poids et mesures, une ordonnance sur les emballages ou une ordonnance sur la sécurité des denrées alimentaires.

6. Dispositif de transport et de pesage selon l'une quelconque des revendications 1 à 5, **caractérisé en ce que** le dispositif de sécurité anti-accès (115, 119, 127, 131, 1151, 1153, 1155, 1157, 1191, 1193, 1271, 1273) du dispositif de transport et de pesage (11) est disposé sur toutes les bandes de transport (19, 27) qui sont disposé entre la bande de pesage (17) et la dernière bande de transport (29), sur laquelle est exécutée une étape de traitement qui est en rapport avec la valeur de poids déterminée par la cellule de pesage (9) ou avec une prescription légale, et le dispositif de sécurité anti-accès (115, 119, 127, 131, 1151, 1153, 1155, 1157, 1191, 1193, 1271, 1273) recouvre également au moins partiellement cette dernière bande de transport (29) dans la direction de transport.

7. Dispositif de transport et de pesage selon l'une quelconque des revendications 1 à 6, **caractérisé en ce que** la sécurité anti-accès (115, 119, 127, 131, 1151, 1153, 1155, 1157, 1191, 1193, 1271, 1273) recouvre au moins partiellement la bande de pesage (17).

8. Dispositif de transport et de pesage selon l'une quelconque des revendications 1 à 7, **caractérisé en ce que** le dispositif de sécurité anti-accès (115, 119, 127, 131, 1151, 1153, 1155, 1157, 1191, 1193, 1271, 1273) est constitué d'un ou de plusieurs barrages photoélectriques ou d'un recouvrement mécanique, en particulier de plaques, de plaques perforées, d'une grille ou de barres.

9. Dispositif de transport et de pesage selon l'une quelconque des revendications 1 à 8, **caractérisé en ce que** le dispositif de transport et de pesage (11) est une marqueuse de prix, une balance de contrôle ou une marqueuse de prix ou une balance de contrôle munie d'un détecteur de métaux (23) ou d'un système d'inspection optique et **en ce que** le dispositif de sécurité anti-accès recouvre également des bandes de transport qui conduisent au dispositif d'évacuation (30) du détecteur de métaux (23) ou du système d'inspection optique et/ou de la balance de contrôle.

10. Dispositif de transport et de pesage selon l'une quelconque des revendications 1 à 9, **caractérisé en ce que** le dispositif de sécurité anti-accès de la bande de pesage (17) est constitué d'une barrière lumineuse, d'une grille ou de barres.

11. Dispositif de transport et de pesage selon l'une quelconque des revendications 1 à 10, **caractérisé en ce que** le dispositif de sécurité anti-accès (115, 119, 127, 131, 1151, 1153, 1155, 1157, 1191, 1193, 1271, 1273) est constitué de plusieurs modules (115, 119, 127, 131), qui sont montés les uns derrière les autres dans la direction de transport sur le dispositif de transport et de pesage (11) .

12. Dispositif de transport et de pesage selon l'une quelconque des revendications 1 à 11, **caractérisé en ce que**, dans la zone d'un détecteur de métaux (23) ou d'un système optique, le dispositif de sécurité anti-accès (115, 119, 127, 131, 1151, 1153, 1155, 1157, 1191, 1193, 1271, 1273) est le boîtier du détecteur de métaux (123) ou du système optique et un dispositif de sécurité anti-accès (115, 119, 127, 131, 1151, 1153, 1155, 1157, 1191, 1193, 1271, 1273) qui y est fixé.

13. Dispositif de transport et de pesage selon l'une quelconque des revendications 1 à 11, **caractérisé en ce que** le dispositif de transport et de pesage (11) comprend un système de commande (7) et un détecteur, le détecteur détectant une intrusion dans une zone recouverte par les barrages photoélectriques (1157) du dispositif de sécurité anti-accès (115) et émettant un signal de détecteur, et le système de commande (7) arrêtant le dispositif de transport et de pesage après réception d'un signal de détecteur, mettant le dispositif d'étiquetage dans un état de marquage non calibré et/ou empêchant l'application d'une étiquette déjà imprimée du dispositif d'étiquetage.
